Europäisches Patentamt

European Patent Office

Office européen des brevets

(19)

(11) Numéro de publication: **0 139 580**
**A1**

(12) **DEMANDE DE BREVET EUROPEEN**

(21) Numéro de dépôt: **84401994.3**

(22) Date de dépôt: **05.10.84**

(51) Int. Cl.⁴: **F 16 H 55/56**

(30) Priorité: **06.10.83 FR 8315894**

(43) Date de publication de la demande:
**02.05.85 Bulletin 85/18**

(84) Etats contractants désignés:
**AT BE CH DE GB IT LI LU NL SE**

(71) Demandeur: **GIRARD TRANSMISSIONS S.A.**
**Zone Industrielle de Lons**
**F-64140 Billere(FR)**

(72) Inventeur: **Stevens, George**
**6, Impasse d'Ossau**
**Lons F-64140 Billere(FR)**

(74) Mandataire: **Collignon, Pierre et al,**
**Cabinet Collignon 6, rue de Madrid**
**F-75008 Paris(FR)**

(54) **Perfectionnement aux variateurs de vitesse à courroie.**

(57) Le flasque mobile 12 de la poulie motrice 9 du variateur s'appuie radialement et axialement, par sa face extérieure, sur un roulement 25 qui s'appuie lui-même sur une couronne de réglage 23 vissée dans la bague de centrage 21 solidaire du carter 1. L'alésage axial 26 du flasque mobile 12 est légèrement supérieur au diamètre de la bague d'entraînement 11 formant moyeu de la poulie motrice, de façon qu'un léger jeu soit ménagé entre la bague 11 et le flasque mobile 12 en empêchant la formation de rouille de contact.

FP 0 139 580 A1

./...

Croydon Printing Company Ltd

Fig. 1

1

## Perfectionnement aux variateurs de vitesse à courroie.

La présente invention concerne les variateurs de vitesse à courroie.

De façon générale, ces appareils comprennent une poulie motrice (reliée à l'arbre moteur) et une poulie réceptrice (reliée à l'arbre récepteur) sur lesquelles circule une courroie de transmission généralement trapézoïdale. Ces poulies sont conçues pour présenter chacune un flasque fixe et un flasque mobile axialement afin que, lors de la variation du régime du moteur, les écartements des flancs des deux poulies varient de façon conjuguée, afin de conserver constante la tension de la courroie, en modifiant le rayon d'entraînement des poulies. Le plus souvent, le flasque mobile de la poulie motrice est monté coulissant sur le moyeu de celle-ci, et un système de butée le maintient en position axiale par rapport au flasque fixe.

Il se trouve que, dans de nombreuses applications, les variateurs de ce type sont appelés rarement à des modifications de la vitesse, et il en résulte que le flasque mobile reste en fait en position fixe ce qui entraîne la formation de rouille de contact dans la partie coulissante qui, rapidement, se bloque et interdit toute nouvelle variation de la vitesse.

La présente invention a pour objet de remédier à cet inconvénient et propose un variateur à courroie dans lequel le montage coulissant du flasque mobile de la poulie motrice, par rapport au moyeu du flasque fixe, est réalisé sans contact de façon à éviter ainsi, dans le cas d'une utilisation prolongée du dispositif sans variation de la vitesse, tout risque d'oxydation de contact susceptible d'empêcher un déplacement ultérieur du flasque mobile.

Selon l'invention, le flasque mobile de la poulie motrice est supporté radialement et axialement, du côté de sa face extérieure, par un roulement s'appuyant lui-même sur une bague fixe lors du fonctionnement de l'appareil. L'alésage axial du flasque mobile est alors prévu légèrement supérieur au diamètre du moyeu de la poulie en ménageant ainsi un léger jeu entre le flasque mobile et ce moyeu. Faute de contact entre ces deux éléments, il y a impossibilité de formation de rouille de contact et donc suppression de tout risque d'un blocage interdisant la variation de la vitesse.

Avantageusement on dispose, entre la bague d'appui et le roulement, une couronne de réglage conçue pour se visser à l'intérieur de cette bague d'appui et dont la face intérieure est solidaire axialement du flasque mobile par l'intermédiaire du roulement. Il en résulte que par vissage de la couronne de réglage à l'intérieur de la bague d'appui, au moyen d'une commande manuelle, on réalise un réglage de la vitesse par déplacement axial de cette couronne et donc du flasque mobile qui en est solidaire.

Pour bien faire comprendre le dispositif selon l'invention, on en décrira ci-après, à simple titre d'exemple sans caractère limitatif, une forme d'exécution préférée en référence au dessin schématique annexé dans lequel :

la figure 1 est une vue en coupe verticale d'un variateur à courroie selon l'invention, destiné à être disposé entre un moteur et un réducteur de vitesse, chaque poulie étant représentée dans chacune de ses deux positions extrêmes d'ouverture; et

la figure 2 est une vue de détail de la figure 1, à plus grande échelle, montrant la structure de la poulie motrice et du système de réglage manuel de la vitesse.

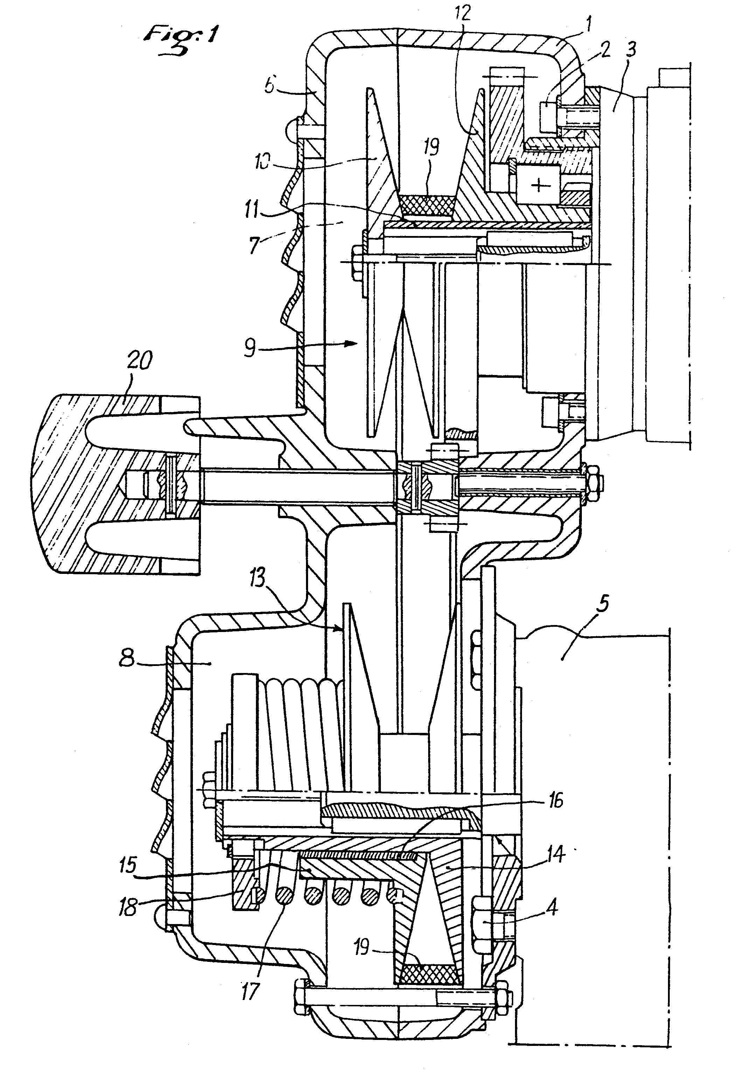

En référence au dessin et plus particulièrement à la figure 1, on a représenté en 1 le carter du variateur dont la face arrière est destinée à être fixée à sa partie supérieure, au moyen de vis 2, à la sortie d'un moteur schématisé en 3 et, à sa partie inférieure, par des vis 4, à l'entrée d'un réducteur de vitesse représenté en 5. La face avant du carter 1 est fermée par un couvercle 6 et délimite intérieurement une chambre supérieure 7 et une chambre inférieure 8.

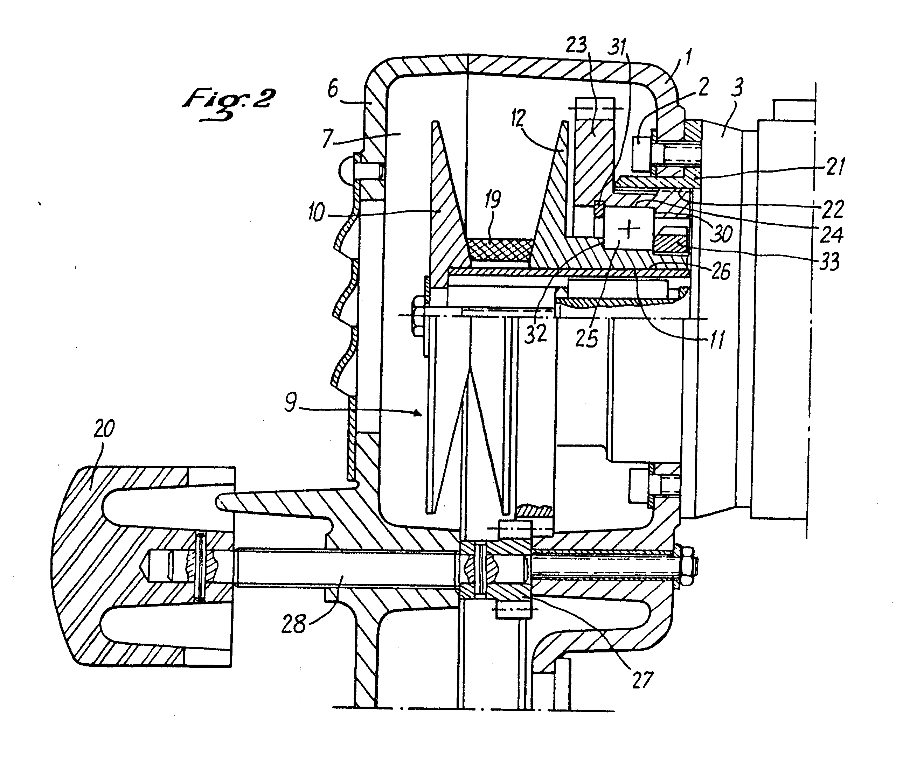

A l'intérieur de la chambre supérieure 7 est disposée la poulie motrice 9 qui comprend un flasque fixe 10 dont le moyeu est solidaire d'une extrémité d'une bague d'entraînement 11 dont l'autre extrémité est fixée sur l'arbre de sortie (non représenté) du moteur 3. Le flasque mobile 12 de la poulie motrice est monté pour se déplacer le long de la bague 11, d'une façon qu'on décrira ci-après plus en détails en référence à la figure 2. A l'intérieur de la chambre inférieure 8 du carter 1 est logée la poulie réceptrice 13 qui, de façon similaire, présente un flasque fixe 14 et un flasque mobile 15. Le flasque fixe 14 est claveté sur l'arbre d'entrée du réducteur de vitesse 5 et le flasque mobile 15 est monté pour coulisser, par l'intermédiaire d'une bague de frottement 16, sur le moyeu du flasque fixe 14. Un ressort de compression 17 est disposé entre le flasque mobile 15 et une bague d'appui 18 fixée sur le moyeu du flasque 14, pour rappeler le flasque mobile vers ce flasque fixe. Une courroie de transmission trapézoïdale 19 relie la poulie motrice 9 et la poulie réceptrice 13. Une poignée de commande manuelle 20, qui sera décrite plus en détails en référence à la figure 2, permet le réglage de la vitesse.

En référence maintenant à la figure 22 on a représenté en 21 une bague à taraudage intérieur servant au centrage du moteur 3 dans l'ouverture ménagée à la partie supérieure de la face arrière du carter 1. Avec la face taraudée de cette bague de centrage 21 coopère la face extérieure également taraudée 22 d'une couronne de réglage 23, et la face extérieure du flasque mobile 12 de la poulie motrice 9 s'appuie radialement et axialement sur un roulement 25 qui s'appuie lui-même sur la face intérieure 24 de la couronne de réglage 23. Dans ce montage, l'alésage axial 26 du flasque mobile 12 est légèrement plus grand que le diamètre extérieur de la bague d'entraînement 11, par exemple d'1 mm environ, ce qui ménage un jeu d'environ 0,5 mm entre la bague 11 et le flasque mobile 12. Ainsi, il n'y a pas de contact entre le flasque mobile 12 et la bague 11 par rapport à laquelle ce flasque se déplace axialement, de sorte qu'il y a impossibilité de toute formation de rouille de contact.

A sa périphérie extérieure la couronne 23 est conçue pour engrener avec un pignon 27 solidaire d'une tige 28 conçue pour tourner à l'intérieur d'un logement axial du couvercle 6 et se terminant à l'extérieur du carter 1 par la poignée de commande manuelle 20. Le roulement 25 est serré d'une part entre un épaulement 30 de la couronne 23 et un circlip 31 engagé dans cette couronne et, d'autre part, entre un épaulement 32 du flasque mobile 12 et un écrou 33 vissé sur le moyeu de ce flasque mobile.

On voit alors que, lorsque l'utilisateur désire régler la vitesse, il agit sur la poignée de réglage 20 pour faire tourner celle-ci dans le sens approprié ce qui entraîne, par l'intermédiaire du pignon 27, une rotation correspondante de la couronne de réglage 23 provoquant le déplacement axial de cette couronne et, par conséquent, le déplacement axial du flasque mobile 12.

On comprendra que la description ci-dessus n'a été donnée qu'à simple titre d'exemple, sans caractère limitatif, et que des adjonctions ou des modifications constructives pourraient y être apportées sans sortir du cadre de l'invention définie par les revendications annexées.

## R E V E N D I C A T I O N S.

1. Variateur de vitesse à courroie comprenant une poulie motrice et une poulie réceptrice sur lesquelles circule une courroie de transmission, chacune de ces deux poulies présentant un flasque fixe et un flasque mobile se déplaçant axialement par rapport au flasque fixe, l'écartement des flasques de ces deux poulies variant de façon conjuguée au cours du fonctionnement, caractérisé en ce que le flasque mobile (12) de la poulie motrice (9) s'appuie radialement et axialement par sa face extérieure sur un roulement (25) qui s'appuie lui-même sur une bague fixe (21) portée par le carter (1) du variateur, alors qu'un léger jeu est ménagé entre l'alésage axial (26) du flasque mobile (12) et le moyeu (11) du flasque fixe (10) de la poulie motrice (9) en empêchant ainsi toute formation de rouille de contact entre le flasque mobile (12) et ce moyeu (11).

2. Variateur de vitesse selon la revendication 1, caractérisé en ce qu'une couronne de réglage (23) est interposée entre la bague d'appui (21) et le roulement (25), les faces en regard de la couronne (23) et de la bague d'appui (21) étant taraudées pour permettre le vissage de cette couronne à l'intérieur de cette bague, et la couronne de réglage (23) étant solidaire axialement du flasque mobile (12) de façon que, par rotation de la couronne (23), on modifie la position axiale du flasque mobile (12) pour régler la vitesse.

3. Variateur de vitesse selon la revendication 2, caractérisé en ce que la commande de la rotation de la couronne (23), pour le réglage de la vitesse, est obtenue en tournant dans le sens convenable une poignée (29) solidaire en rotation d'un pignon (27) engrenant avec ladite couronne (23).

*Fig.1*

Fig. 2

0139580

Office européen
des brevets

**RAPPORT DE RECHERCHE EUROPEENNE**

## DOCUMENTS CONSIDERES COMME PERTINENTS

| Catégorie | Citation du document avec indication en cas de besoin, des parties pertinentes | Revendication concernee | CLASSEMENT DE LA DEMANDE (Int. Cl.4) |
|---|---|---|---|
| A | FR-A-1 339 933 (FILTAC)<br>* en entier * | 1,2,3 | F 16 H 55/56 |
| A | FR-A-2 286 322 (WOOD'S)<br>* en entier * | 1,2,3 | |
| A | US-A-3 727 477 (MURPHY)<br>* en entier * | 1 | |
| A | GB-A- 15 266 (MILNE)(A.D. 1911)<br>* figures 1,2 * | 1 | |
| A | FR-A-1 219 100 (ORTMANS) | | |

DOMAINES TECHNIQUES
RECHERCHES (Int. Cl.4)

F 16 H 55/00
F 16 H 9/00

Le présent rapport de recherche a été établi pour toutes les revendications

| Lieu de la recherche | Date d'achèvement de la recherche | Examinateur |
|---|---|---|
| LA HAYE | 07-12-1984 | FLORES E. |